# EUROPÄISCHE PATENTSCHRIFT

(11) **EP 3 741 532 B1**
(45) Veröffentlichungstag und Bekanntmachung des Hinweises auf die Patenterteilung: **12.05.2021**
(21) Anmeldenummer: 19176445.5
(22) Anmeldetag: 24.05.2019
(51) Int. Cl.: B27N 1/00, B01D 53/14

(54) **HOLZWERKSTOFFPLATTEN-HERSTELLANLAGE UND VERFAHREN ZUM HERSTELLEN VON HOLZWERKSTOFFPLATTEN**
WOOD MATERIAL BOARD PRODUCTION ASSEMBLY AND METHOD FOR MANUFACTURING WOOD MATERIAL BOARDS
INSTALLATION DE FABRICATION DE PLAQUES EN MATÉRIAU DÉRIVÉ DU BOIS ET PROCÉDÉ DE FABRICATION D'UNE PLAQUE EN MATÉRIAU DÉRIVÉ DU BOIS

(43) Veröffentlichungstag der Anmeldung: 25.11.2020
(73) Patentinhaber: Swiss Krono TEC AG, 6004 Luzern (CH)
(72) Erfinder: Geppert, Gunnar, 6403 Küssnacht am Rigi (CH); De Luca, Aurelio, 20161 Mailand (IT)
(74) Vertreter: Gramm, Lins & Partner Patent- und Rechtsanwälte PartGmbB

(56) Entgegenhaltungen:
- EP-A1- 2 944 368
- WO-A1-92/00792
- WO-A1-2015/007408

## Beschreibung

Die Erfindung betrifft eine Holzwerkstoffplatten-Herstellanlage mit (a) einer Formaldehyd-Absorptionsanlage zum Bringen von gasförmigem Formaldehyd in Lösung, sodass Formaldehydlösung entsteht, und (b) einer Holzpartikel-Herstellvorrichtung zum Herstellen von Holzpartikeln, wobei (c) die Holzpartikel-Herstellvorrichtung einen Holzpartikeltrockner aufweist.

Gemäß einem zweiten Aspekt betrifft die Erfindung ein Verfahren zum Herstellen von Holzwerkstoffplatten, mit den Schritten (a) Herstellen von Formaldehydlösung durch Einbringen von Formaldehydgasen in eine wässrige Flüssigkeit mittels einer Formaldehyd-Absorptionsanlage, (b) Herstellen von Holzpartikeln mittels einer Holzpartikel-Herstellvorrichtung, (c) Trocknen der Holzpartikel, (d) Beleimen der Holzpartikel und (e) Herstellen der Holzwerkstoffplatte aus den beleimten Holzpartikeln.

Holzwerkstoffplatten sind plattenförmige Bauteile, die unter Verwendung von zerkleinertem Holz hergestellt werden. Beispiele für Holzwerkstoffplatten sind Spanplatten, Grobspanplatten, die auch als OSB-Platten bekannt sind, oder Holzfaserplatten. Holzfaserplatten sind beispielsweise mitteldichte Faserplatten (MDF-Platten) oder hochdichte Faserplatten (HDF-Platten).

Besonders relevant sind Holzwerkstoffplatten, die mittels eines Leims auf Formaldehydbasis hergestellt werden. Auf Holzwerkstoffplatten-Herstellanlagen, die diese Holzwerkstoffplatten herstellen, bezieht sich die Erfindung im Besonderen. Solche Holzwerkstoffplatten-Herstellanlagen haben einen signifikanten Energiebedarf. Zudem geben Sie eine Wärmeleistung an die Umgebung ab, was unerwünscht ist.

Aus der WO 92/00792, die den Oberbegriff der Ansprüche 1 und 7 offenbart, ist bekannt, das Abgas des Trockners durch einen Gaswäscher zu leiten. Dabei wird der größte Teil an festen und gasförmigen Verunreinigungen, beispielsweise Formaldehyd, im Wasser gebunden. Der Gewinn an Wärme, der daraus resultiert, stammt aus der Abkühlung des Abgases.

Der Erfindung liegt die Aufgabe zu Grunde, die Herstellung von Holzwerkstoffplatten zu verbessern.

Die Erfindung löst das Problem durch eine gattungsgemäße Holzwerkstoffplatten-Herstellanlage, bei der die Formaldehyd-Absorptionsanlage einen Wärmetauscher zum Auskoppeln von Wärmeenergie aufweist und der Holzpartikeltrockner zum Trocknen der Holzpartikel mittels der ausgekoppelten Wärmeenergie ausgebildet ist. Gemäß einem zweiten Aspekt löst die Erfindung das Problem durch ein gattungsgemäßes Verfahren mit den Schritten (f) Auskoppeln von Wärmeenergie aus der Formaldehyd-Absorptionsanlage, insbesondere mittels eines Wärmetauschers, und (g) Verwenden der Wärmeenergie zum Trocknen der Holzpartikel.

Im Rahmen der vorliegenden Beschreibung wird unter der Formaldehyd-Absorptionsanlage eine Anlage verstanden, der gasförmiges Formaldehyd und eine wässrige Flüssigkeit, insbesondere Wasser, zugeführt werden und die daraus eine Formaldehydlösung herstellt. Eine derartige Formaldehydlösung wird auch als Formalin bezeichnet. Die Holzwerkstoffplatten-Herstellanlage besitzt vorzugsweise eine Formaldehyd-Anlage zum Herstellen von Formaldehyd durch oxidative Umsetzung von Methanol. Diese Formaldehyd-Anlage erzeugt ein Heißgas, das in der Formaldehyd-Absorptionsanlage, die auch als Absorberflotte bezeichnet werden könnte, mit Wasser gekühlt wird und sich in diesem Wasser löst.

Unter der Holzpartikel-Herstellvorrichtung wird insbesondere eine Vorrichtung verstanden, die Holzpartikel herstellt. Das kann beispielsweise durch Zerfasern oder spanende Bearbeitung, beispielsweise Häckseln, erfolgen.

Unter einem Auskoppeln wird die Entnahme von Wärmeenergie zur späteren Nutzung verstanden. Das Entnehmen von Wärmeenergie, das lediglich den Zweck hat, den entsprechenden Prozess zu kühlen, wird nicht als ein Auskoppeln betrachtet.

Vorteilhaft an der Erfindung ist, dass der Primärenergiebedarf deutlich gesenkt werden kann. Bei bekannten Holzwerkstoffplatten-Herstellanlage werden Leistungen von mehreren Megawatt dazu verwendet, die Holzpartikel zu trocknen. Dies geschieht in der Regel mittels Hochtemperaturtrocknung. Dazu wird ein Brennstoff, häufig Erdgas oder Holzabfall, verfeuert und die heißen Rauchgase in Kontakt mit den Holzpartikeln gebracht. Dadurch trocknen die Holzpartikel sehr schnell und gründlich.

Bei Holzwerkstoffplatten-Herstellanlagen gemäß dem Stand der Technik ist nicht erwogen worden, die Absorptionswärme, die beim Absorbieren von Formaldehyd in der wässrigen Lösung entsteht, zu nutzen. Der Grund hierfür ist, dass die Absorptionswärme auf einem so geringen Temperaturniveau vorliegt, dass die damit erreichbare Trockengeschwindigkeit zu gering ist.

Die Erfindung beruht auf der Erkenntnis, dass eine wirtschaftliche Nutzung der Absorptionswärme durchaus möglich ist, insbesondere dann, wenn der Absorptionsprozess so gestaltet wird, dass das Temperaturniveau oberhalb von 50°C, insbesondere oberhalb von 55°C, liegt. Das wurde bislang als nicht realisierbar erachtet, da oberhalb von 77°C Formaldehyd aus einer Formaldehydlösung ausgetrieben wird. Aus physikalischen Gründen ist es daher nicht möglich, die Formaldehyd-Absorptionsanlage oberhalb von 77°C betreiben.

Auch unterhalb unter dieser Temperatur verläuft die Aufnahme von Formaldehydgas in die wässrige Flüssigkeit umso langsamer, je höher die Temperatur ist. Es hat sich aber gezeigt, dass eine Erhöhung der Temperatur in der Formaldehyd-Absorptionsanlage dennoch möglich ist, ohne dass diese ihre Funktionsfähigkeit verliert. Auf diese Weise kann die Wärmeenergie auf einem Temperaturniveau von zumindest 50°C, insbesondere zumindest 55°C, ausgekoppelt werden. Da die Menge an Wasser, die Luft aufnehmen kann, mit zunehmender Temperatur überproportional ansteigt, ist das erreichbare Temperaturniveau hinreichend, um die Holzpartikel zumindest vorzutrocknen.

Gemäß einer bevorzugten Ausführungsform besitzt die Formaldehyd-Absorptionsanlage (a) ein Absorptionsgefäß, (b) eine Einbringleitung zum Einbringen von Formaldehyd in das Absorptionsgefäß und (c) einen ersten Rezirkulationskreislauf der (i) eine erste Entnahmestelle zum Entnehmen von Formaldehydlösung aus dem Absorptionsgefäß, (ii) eine erste Zuführstelle zum Zuführen von Formaldehydlösung in das Absorptionsgefäß, (iii) einen Wärmetauscher und (iv) eine erste Pumpe zum Fördern der Formaldehydlösung von der ersten Entnahmestelle durch den Wärmetauscher zur ersten Zuführstelle aufweist. Auf diese Weise kann Absorptionswärme effektiv abgeführt werden.

Der Rezirkulationskreislauf bewirkt, dass Formaldehydlösung, die noch weiteres gasförmiges Formaldehyd aufnehmen kann, in Kontakt mit gasförmigem Formaldehyd gebracht wird. Beispielsweise ist die erste Zuführstelle ausgebildet als Düse oder Eintropfvorrichtung, sodass Formaldehydlösungen als Tröpfchen oder Tropfen in das Absorptionsgefäß eingebracht werden. Von dort fällt die Formaldehydlösung nach unten und bewegt sich dabei entgegen einer Strömungsrichtung des gasförmigen Formaldehyds. Auf diese Weise wird die Kontaktfläche zwischen der wässrigen Flüssigkeit und dem Formaldehydgas vergrößert, sodass weiteres Formaldehyd in Lösung geht.

Je mehr Absorptionswärme ausgekoppelt wird, desto höher kann die Energieeinsparung beim Trocknen sein. Da mit zunehmendem Anteil an ausgekoppelter Absorptionswärme auch der apparative Aufwand steigt, werden vorzugsweise höchstens 95% der Absorptionswärme ausgekoppelt.

Vorzugsweise besitzt die Formaldehyd-Absorptionsanlage zumindest einen zweiten Rezirkulationskreislauf, der (i) eine zweite Entnahmestelle zum Entnehmen von Formaldehydlösung aus dem Absorptionsgefäß, (ii) eine zweite Zuführstelle zum Zuführen von Formaldehydlösung in das Absorptionsgefäß und (iii) eine zweite Pumpe zum Fördern der Formaldehydlösung von der zweiten Entnahmestelle durch den Wärmetauscher zur zweiten Zuführstelle hat, und ausgebildet ist zum Abführen von höchstens 15% der Absorptionswärme.

Wie der erste Rezirkulationskreislauf bewirkt der zweite Rezirkulationskreislauf eine verbesserte Aufnahme von Formaldehyd in die wässrige Lösung. Anders als der erste Rezirkulationskreislauf dient dieser aber nicht zum Abführen von Absorptionswärme. Zumeist ist es möglich, dass über den zweiten Rezirkulationskreislauf Wärme abgeführt wird, insbesondere durch Wärmeverluste in den Leitungen.

Es ist zwar möglich, dass auch der zweite Rezirkulationskreislauf ausgebildet ist zum Auskoppeln von Wärmeenergie, in diesem Fall wird aber höchstens die Hälfte, vorzugsweise höchstens ein Drittel, besonders bevorzugt höchstens ein Viertel, insbesondere höchstens ein Fünftel der Wärmemenge ausgekoppelt, die vom ersten Rezirkulationskreislauf ausgekoppelt wird.

Bevorzugt arbeitet der zweite Rezirkulationskreislauf auf einem zweiten Temperaturniveau, das, vorzugsweise zumindest 4 Kelvin, unter einem ersten Temperaturniveau des ersten Rezirkulationskreislaufs liegt.

Der zweite Rezirkulationskreislauf ist vorzugsweise in einer Gasflussrichtung des gasförmigen Formaldehyds vor dem ersten Rezirkulationskreislauf angeordnet. Das bedeutet insbesondere, dass gasförmiger Formaldehyd die zweite Zuführstelle passiert hat, bevor er die erste Zuführstelle und insbesondere die erste Entnahmestelle, passiert.

Dadurch, dass die Absorptionswärme zumindest überwiegend durch den ersten Rezirkulationskreislauf abgeführt wird, arbeitet dieser auf einem höheren Temperaturniveau als der zweite Rezirkulationskreislauf. Dadurch kann die vom ersten Rezirkulationskreislauf ausgekoppelte Wärmeenergie auf einem zentralen Temperaturniveau ausgekoppelt werden, das zum Trocknen der Holzpartikel besonders gut geeignet ist.

Gemäß einer bevorzugten Ausführungsform ist die Formaldehyd-Absorptionsanlage daher so ausgebildet, dass sie auf einem zweiten Temperaturniveau arbeitet, das unter einem ersten Temperaturniveau des ersten Rezirkulationskreislaufs liegt. Vorzugsweise weist der Holzpartikeltrockner einen Bandtrockner auf, der ein Förderband hat, das luftdurchlässig ist. In diesem Fall ist es günstig, wenn der Holzpartikeltrockner einen Trockner-Wärmetauscher, beispielsweise einen Register-Wärmetauscher, aufweist, mittels dem die aus der Formaldehyd-Absorptionsanlage ausgekoppelte Wärmeenergie Luft erwärmt. Diese Luft wird durch das Förderband und die auf dem Förderband liegenden Holzpartikel geleitet, sodass die Holzpartikel getrocknet werden. So entsteht Abluft, die abgeführt wird.

Besonders günstig ist es, wenn die Öffnungen zumindest 90% kleiner sind als 3 Millimeter. Hierunter ist zu verstehen, dass von 10 Öffnungen im Mittel höchstens eine größer ist als 3 Millimeter. Besonders günstig ist es, wenn alle Öffnungen kleiner sind als 3 Millimeter. So wirkt das Förderband gleichzeitig als Filter, sodass die Zahl der Partikel, die von der erwärmten Luft beim Trocknen mitgerissen werden, besonders klein bleibt. Besonders günstig ist es, wenn das Förderband ein Textil aufweist. Dieses wirkt dann gleichzeitig als Filter.

Vorzugsweise besitzt der Holzpartikeltrockner einen Heißtrockner, der in Materialflussrichtung der Holzpartikel hinter dem Band angeordnet ist. Heißtrockner werden bei einer Temperatur von zumindest 100°C betrieben und führen zu einer sehr geringen Restfeuchte der Holzpartikel.

Gemäß einer bevorzugten Ausführungsform besitzt die Holzwerkstoffplatten-Herstellanlage (a) einen Wärmetransportkreislauf, der (i) eine Vorlaufleitung für ein Wärmetransportmedium, insbesondere eine Wärmetransportflüssigkeit, vom Wärmetauscher zum Holzpartikeltrockner und (ii) eine Umwälzpumpe zum Umwälzen des Wärmetransportmediums aufweist und (b) eine Anlagensteuerung, die ausgebildet ist zum automatischen Ansteuern der Umwälzpumpe und/oder der ersten Pumpe des ersten Rezirkulationskreislaufs, sodass eine Vorlauftemperatur des Transportmediums in der Vorlaufleitung zumindest 55°C, insbesondere zumindest 60°C, beträgt.

Besonders günstig ist es, wenn die Anlagensteuerung ausgebildet ist zum Regeln eines Formaldehydgas-Volumenstroms an gasförmigem Formaldehyd in das Absorptionsgefäß und zum Regeln eines Wasser-Volumenstroms an wässriger Flüssigkeit in das Absorptionsgefäß.

Besonders günstig ist es, wenn die Anlagensteuerung ausgebildet ist zum Regeln der zweiten Pumpe, sodass eine Temperatur an der zweiten Entnahmestelle höchstens 45° beträgt.

Vorzugsweise umfasst die Holzwerkstoffplatten-Herstellanlage (a) eine Beleimungsanlage zum Beleimen der Holzpartikel mit Holzleim, sodass beleimte Holzpartikel entstehen, (b) eine Streuanlage zum Streuen der beleimten Holzpartikel zu einem Schichtkörper und (c) eine Presse zum Verpressen des Schichtkörpers zu einer Holzwerkstoffplatte.

Besonders günstig ist es, wenn die Holzwerkstoffplatten-Herstellanlage eine OSB-Platten-Herstellanlage zum Herstellen von OSB-Platten ist. OSB-Platten enthalten lange, flache Späne, die auch OSB-Strands genannt werden. Die OSB-Strands können besonders gut mittels der ausgekoppelten Wärme getrocknet werden.

Gemäß einer bevorzugten Ausführungsform umfasst die Holzpartikel-Herstellvorrichtung einen Entrinder zum Entrinden von Holzstämmen und/oder einen Zerkleinerer zum Herstellen von OSB-Strands aus entrindeten Holzstämmen.

Günstig ist es, wenn die Holzwerkstoffplatten-Herstellanlage eine Separieranlage zum Trennen der getrockneten OSB-Strands in Mittelschicht-Strands und Deckschicht-Strands aufweist. In einer vorzugsweise vorhandenen Streuanlage zum Streuen der beleimten Holzpartikel zu einem Schichtkörper werden die Mittelschicht-Strands vorzugsweise zwischen zwei äußeren Lagen aus Deckschicht-Strands gestreut.

Die Holzwerkstoffplatten-Herstellanlage kann eine Holzleim-Herstellanlage zum Herstellen von Holzleim aus der Formaldehydlösung aufweisen, das ist aber nicht notwendig.

Im Folgenden wird die Erfindung anhand der beigefügten Zeichnung näher erläutert. Dabei zeigt:
- Figur 1: ein Flussdiagramm einer erfindungsgemäßen Holzwerkstoffplatten-Herstellanlage zum Durchführen eines erfindungsgemäßen Verfahrens.
- Figur 2: zeigt ein Flussdiagramm einer zweiten Ausführungsform einer erfindungsgemäßen Holzwerkstoffplatten-Herstellanlage zum Durchführen eines erfindungsgemäßen Verfahrens.

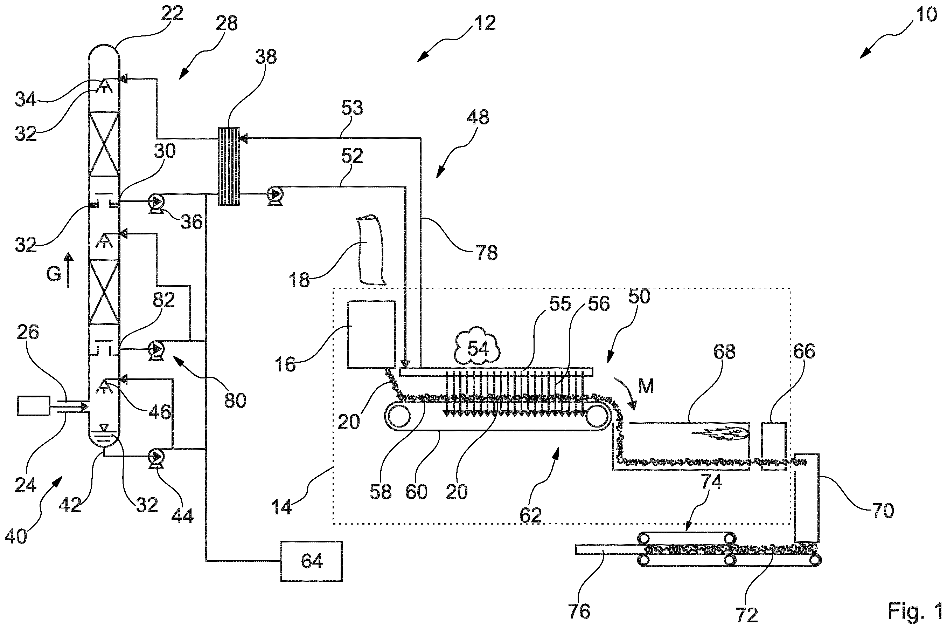

Figur 1 zeigt eine Prinzipdarstellung einer erfindungsgemäßen Holzwerkstoffplatten-Herstellanlage 10, die eine Formaldehyd-Absorptionsanlage 12 und eine Holzpartikel-Herstellvorrichtung 14 aufweist. Die Holzpartikel-Herstellvorrichtung 14 umfasst einen Zerkleinerer 16, der im vorliegenden Fall durch einen Hacker zum Zerhacken von Holz 18 zu Holzpartikeln 20. Im vorliegenden Fall sind die Holzpartikel Grobspäne.

Die Formaldehyd-Absorptionsanlage 12 besitzt ein Absorptionsgefäß 22 und eine Einbringleitung 24 zum Einbringen von gasförmigem Formaldehyd 26 in das Absorptionsgefäß 22. Die Formaldehyd-Absorptionsanlage 12 umfasst zudem einen ersten Rezirkulationskreislauf 28, der eine erste Entnahmestelle 30 zum Entnehmen von Formaldehydlösung 32 aufweist. Die Formaldehydlösung entsteht dadurch, dass sich der gasförmige Formaldehyd 26 in Wasser löst. Der erste Rezirkulationskreislauf 28 umfasst zudem eine erste Zuführstelle 34 zum Zuführen von Formaldehydlösung 32 des Absorptionsgefäßes 22. Die Formaldehydlösung 32 wird mittels einer ersten Pumpe 36 an der ersten Entnahmestelle 30 abgezogen und durch einen Wärmetauscher 38 zur ersten Zuführstelle 34 gepumpt.

Es ist günstig, nicht aber notwendig, dass die Formaldehyd-Absorptionsanlage 12 wie im vorliegenden Ausführungsbeispiel einen zweiten Rezirkulationskreislauf 40 hat, der eine zweite Entnahmestelle 42 zum Entnehmen von Formaldehydlösung 32 und eine zweite Pumpe 44 aufweist, mittels der die Formaldehydlösung 32 zu einer zweiten Zuführstelle 46 gepumpt wird. Der zweite Rezirkulationskreislauf 40 umfasst keinen Wärmetauscher.

Beim Absorbieren des Formaldehyds 26 durch das Wasser entsteht Absorptionswärme, die auch als Lösungswärme bezeichnet werden könnte, und wird daher vom zweiten Rezirkulationskreislauf 40 im technischen Sinne nicht abgeführt. Zwar kommt es in der Regel zu einer Wärmeabgabe des zweiten Rezirkulationskreislaufs 40 an die Umgebung, da die Rohrleitungen des zweiten Rezirkulationskreislaufs 40 in der Regel wärmer sind als die Umgebung. Diese Wärmeverluste sind aber so klein, dass sie im Vergleich zu der Wärme, die durch den Wärmetauscher 38 abgeführt wird, technisch irrelevant sind.

Die vom Wärmetauscher 38 ausgekoppelte Wärmeenergie wird über einen Wärmetransportkreislauf 48 zu einem Holzpartikeltrockner 50 geleitet. Der Wärmetransportkreislauf 48 besitzt eine Vorlaufleitung 52 und eine Rücklaufleitung 53, in der ein Wärmetransportmedium, insbesondere eine Wärmetransportflüssigkeit wie beispielsweise Wasser zirkuliert. Das Wärmetransportmedium wird von einer Umwälzpumpe umgewälzt.

Vom Holzpartikeltrockner 50 wird Luft 54, beispielsweise Umgebungsluft, mithilfe der Wärmeenergie des Wärmetransportmediums im Wärmetransportkreislauf 48 mittels eines Registerwärmetauschers 55 erwärmt, sodass Trockenluft 56 entsteht. Die Trockenluft 56 fließt durch eine Schüttung 58 an Holzpartikeln 20, die auf einem Förderband 60 eines Bandtrockners 62 liegen. Der Bandtrockner 62 ist Teil des Holzpartikeltrockners 50.

Die Trockenluft 56 nimmt Feuchtigkeit aus den Holzpartikeln 20 auf, strömt durch das Förderband 60 und wird von dort abgeführt, beispielsweise über einen Kamin in die Umgebung abgegeben.

Die Formaldehydlösung 32 wird einer optional vorhandenen Holzleim-Herstellanlage 64 zugeführt, die daraus beispielsweise einen Holzleim herstellt, insbesondere Harnstoff-Formaldehydharz (UF) oder Melaminformaldehydharz.

In einer Materialflussrichtung hinter dem Bandtrockner 62 ist ein Heißtrockner 68 angeordnet, mittels dem die Holzpartikel 20, die vom Bandtrockner 62 kommen, fertig getrocknet werden. Die so erhaltenen getrockneten Holzpartikel 20 werden in der Beleimungsanlage 66 beleimt, in einer Streuanlage 70 zu einem Schichtkörper 72 gestreut und dann mittels einer Presse 74 zu einer Holzwerkstoffplatte 76 verpresst.

Beim Betrieb der Holzwerkstoffplatten-Herstellanlage 10 beträgt eine Vorlauftemperatur T₅₂ der Vorlaufleitung 52 zumindest = T₅₂ = 55°C, im vorliegenden Fall gilt T₅₂ = 65°C. Eine Rücklauftemperatur T₅₃ in der Rücklaufleitung 53 liegt vorzugswiese unterhalb von T₅₃ = 50°C, im vorliegenden Fall gilt T₅₃ = 42°C.

Eine erste Entnahmestellentemperatur T₃₀ beträgt vorzugsweise zumindest T₃₀ = 57°C. Im vorliegenden Fall gilt T₃₀ = 67°C. Eine zweite Entnahmestellentemperatur T₄₂ an der zweiten Entnahmestelle 42 ist zumindest 10 Kelvin kleiner als die erste Entnahmestellentemperatur T₃₀.

Die zweite Entnahmestelle 42 ist in einer Gasflussrichtung G des gasförmigen Formaldehyds 26, beispielsweise wie hier in Form eines Heißgases, vor der ersten Entnahmestelle 30 angeordnet. Besitzt die Formaldehyd-Absorptionsanlage 12 die gemäß einer bevorzugten Ausführungsform wie im Ausführungsbeispiel vorgesehen einen dritten Rezirkulationskreislauf 80.

Der dritte Rezirkulationskreislauf 80 ist bezüglich der Gasflussrichtung G zwischen dem zweiten Rezirkulationskreislauf 40 und dem ersten Rezirkulationskreislauf 28 angeordnet.

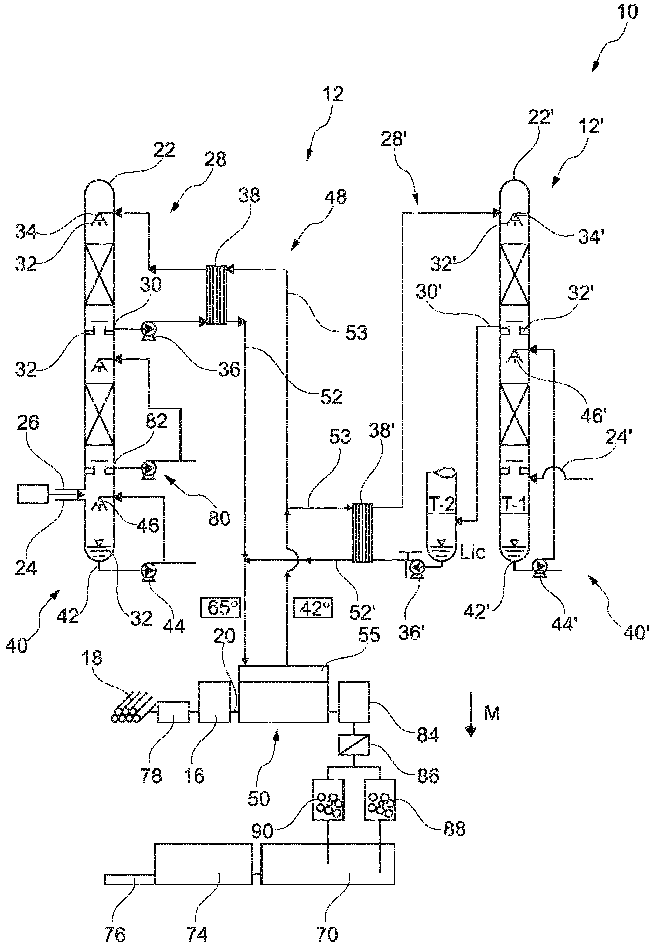

Figur 2 zeigt eine zweite Ausführungsform einer erfindungsgemäßen Holzwerkstoffplatten-Herstellanlage 10, die eine zweite Formaldehyd-Absorptionsanlage 12' aufweist. Die Komponenten der zweiten Formaldehyd-Absorptionsanlage 12', die denen der ersten Formaldehyd-Absorptionsanlage 12 entsprechen tragen das entsprechende Bezugszeichen mit zusätzlich einem Apostroph.

Der erste Rezirkulationskreislauf 28' koppelt seine Wärme über einen zweiten Wärmetauscher 38' in den ersten Wärmetransportkreislauf 48 ein. Wie bei der Ausführungsform gemäß Figur 1 wird die Wärme des Wärmetransportkreislaufs 48 an den Registerwärmetauscher 55 abgegeben, der damit Luft erwärmt.

Die Holzwerkstoffplatten-Herstellanlage 10 umfasst einen Entrinder 78 zum Entrinden der Holzstämme 18. Die entrindeten Holzstämme 18 gelangen in den Zerkleinerer 16, der daraus die Holzpartikel 20 in Form von OSB-Strands herstellt. Die OSB-Strands 20 werden im Holzpartikeltrockner 50 getrocknet und gelangen danach in einem Trommeltrockner 84.

In Materialflussrichtung M hinter dem Trommeltrockner 84 ist ein Sieb 86 angeordnet, das die OSB-Strands in Deckschicht-Strands 88 und Mittelschicht-Strand 90 klassiert. Die in Materialflussrichtung M nachgeschaltete Steueranlage 70 streut die Mittelschicht-Strands 90 zwischen zwei Lagen an Deckschicht-Strands 88, sodass die von der Presse 84 hergestellten Holzwerkstoffplatten 76 in Form von OSB-Platten eine Deckschicht aus Deckschicht-Strands hat und eine Mittelschicht aus Mittelschicht-Strands.

**Bezugszeichenliste**

| | | | |
|---|---|---|---|
| 10 | Holzwerkstoffplatten-Herstellanlage | 60 | Förderband |
| 12 | Formaldehyd-Absorptionsanlage | 62 | Bandtrockner |
| 14 | Holzpartikel-Herstellvorrichtung | 64 | Holzleim-Herstellanlage |
| 16 | Zerkleinerer | 66 | Beleimungsanlage |
| 18 | Holz, Stamm | 68 | Heißtrockner |
| | | | |
| 20 | Holzpartikel | 70 | Streuanlage |
| 22 | Absorptionsgefäß | 72 | Schichtkörper |
| 24 | Einbringleitung | 74 | Presse |
| 26 | Formaldehyd | 76 | Holzwerkstoffplatte |
| 28 | erster Rezirkulationskreislauf | 78 | Entrinder |
| | | | |
| 30 | erste Entnahmestelle | 80 | dritter Rezirkulationskreislauf |
| 32 | Formaldehydlösung | 82 | dritte Entnahmestelle |
| 34 | erste Zuführstelle | 84 | Trommeltrockner |
| 36 | erste Pumpe | 86 | Sieb |
| 38 | Wärmetauscher | 88 | Deckschicht-Strand |
| | | | |
| 40 | zweiter Rezirkulationskreislauf | 90 | Mittelschicht-Strand |
| 42 | zweite Entnahmestelle | T₅₂ | Vorlauftemperatur |
| 44 | zweite Pumpe | T₅₃ | Rücklauftemperatur |
| 46 48 | zweite Zuführstelle Wärmetransportkreislauf | T₃₀ | erste Entnahmestellentemperatur |
| | | T₄₂ | zweite Entnahmestellentemperatur |
| 50 | Holzpartikeltrockner | T₈₂ | dritte Entnahmestellentemperatur |
| 52 | Vorlaufleitung | | |
| 53 | Rücklaufleitung | G | Gasflussrichtung |
| 54 | Luft | | |
| 55 | Registerwärmetauscher | | |
| 56 | Trocken luft | | |
| 58 | Schüttung | | |

## Patentansprüche

1. Holzwerkstoffplatten-Herstellanlage (10) mit
(a) einer Formaldehyd-Absorptionsanlage (12) zum Bringen von gasförmigem Formaldehyd (26) in Lösung, sodass Formaldehydlösung (32) entsteht, und
(b) einer Holzpartikel-Herstellvorrichtung (14) zum Herstellen von Holzpartikeln (20),
(c) wobei die Holzpartikel-Herstellvorrichtung (14) einen Holzpartikeltrockner (50) aufweist,
(d) wobei die Formaldehyd-Absorptionsanlage (12) einen Wärmetauscher (38) zum Auskoppeln von Wärmeenergie aufweist, wobei Auskoppeln eine Entnahme von Wärmeenergie zur späteren Nutzung bezeichnet, und
(e) der Holzpartikeltrockner (50) zum Trocknen der Holzpartikel (20) mittels der ausgekoppelten Wärmeenergie ausgebildet ist,
(f) wobei die Formaldehyd-Absorptionsanlage (12)
(i) ein Absorptionsgefäß (22),
(ii) eine Einbringleitung (24) zum Einbringen von Formaldehyd (26) in das Absorptionsgefäß (22) und
(iii) einen ersten Rezirkulationskreislauf (28), der
- eine erste Entnahmestelle (30) zum Entnehmen von Formaldehydlösung (32) aus dem Absorptionsgefäß (22),
- eine erste Zuführstelle (34) zum Zuführen von Formaldehydlösung (32) in das Absorptionsgefäß (22),
- einen Wärmetauscher (38) und
- eine erste Pumpe (36) zum Fördern der Formaldehydlösung (32) von der ersten Entnahmestelle (30) durch den Wärmetauscher (38) zur ersten Zuführstelle (34) hat,
aufweist und
(iv) ausgebildet ist zum Abführen von zumindest 50% einer Absorptionswärme, die beim Bringen des gasförmigen Formaldehyd (26) in Lösung entsteht,
**dadurch gekennzeichnet, dass**
(g) die Formaldehyd-Absorptionsanlage (12)
(i) zumindest einen zweiten Rezirkulationskreislauf (40), der
- eine zweite Entnahmestelle (42) zum Entnehmen von Formaldehydlösung (32) aus dem Absorptionsgefäß (22),
- eine zweite Zuführstelle (46) zum Zuführen von Formaldehydlösung (32) in das Absorptionsgefäß (22) und
- eine zweite Pumpe (44) zum Fördern der Formaldehydlösung (32) von der zweiten Entnahmestelle (42) durch den Wärmetauscher (38) zur zweiten Zuführstelle (46) hat, und
(ii) ausgebildet ist zum Abführen von höchstens 15% der Absorptionswärme und/oder auf einem zweiten Temperaturniveau arbeitet, das unter einem ersten Temperaturniveau des ersten Rezirkulationskreislaufs (28) liegt.

2. Holzwerkstoffplatten-Herstellanlage (10) nach einem der vorstehenden Ansprüche, **dadurch gekennzeichnet, dass**
(a) der Holzpartikeltrockner (50) einen Bandtrockner (62) aufweist, der ein Förderband (60) hat, und
(b) das Förderband (60) luftdurchlässig ist.

3. Holzwerkstoffplatten-Herstellanlage (10) nach Anspruch 2, **dadurch gekennzeichnet, dass** das Förderband (60)
(a) Öffnungen hat, die zu zumindest 90% kleiner sind als 3 Millimeter und/oder
(b) ein Textil aufweist.

4. Holzwerkstoffplatten-Herstellanlage (10) nach einem der vorstehenden Ansprüche 2 oder 3, **dadurch gekennzeichnet, dass**
der Holzpartikeltrockner (50) einen Heißtrockner (68) aufweist, der in Materialflussrichtung der Holzpartikel (20) hinter dem Bandtrockner (62) angeordnet ist.

5. Holzwerkstoffplatten-Herstellanlage (10) nach einem der vorstehenden Ansprüche, **gekennzeichnet durch**
(a) einen Wärmetransportkreislauf (48), der
(i) eine Vorlaufleitung (52) für ein Wärmetransportmedium, insbesondere eine Wärmetransportflüssigkeit, vom Wärmetauscher (38) zum Holzpartikeltrockner (50) und
(ii) eine Umwälzpumpe zum Umwälzen des Wärmetransportmediums aufweist und
(b) eine Anlagensteuerung, die ausgebildet ist zum automatischen Ansteuern der Umwälzpumpe und/oder der ersten Pumpe (36), sodass eine Vorlauftemperatur (T₅₂) des Wärmetransportmediums in der Vorlaufleitung (52) zumindest 55°C, insbesondere zumindest 60°C, beträgt.

6. Holzwerkstoffplatten-Herstellanlage (10) nach einem der vorstehenden Ansprüche, **gekennzeichnet durch**
(a) eine Beleimungsanlage (66) zum Beleimen der Holzpartikel (20) mit Holzleim, sodass beleimte Holzpartikel (20) entstehen,
(b) eine Streuanlage (70) zum Streuen der beleimten Holzpartikel (20) zu einem Schichtkörper (72) und
(c) eine Presse (74) zum Verpressen des Schichtkörpers (72) zu einer Holzwerkstoffplatte (76).

7. Verfahren zum Herstellen von Holzwerkstoffplatten (76), mit den Schritten
(a) Herstellen von Formaldehydlösung (32) durch Einbringen von Formaldehydgas in eine wässrige Flüssigkeit mittels einer Formaldehyd-Absorptionsanlage (12),
(b) Herstellen von Holzpartikeln (20) mittels einer Holzpartikel-Herstellvorrichtung (14),
(c) Trocknen der Holzpartikel (20),
(d) Beleimen der Holzpartikel (20) und
(e) Herstellen der Holzwerkstoffplatte aus den beleimten Holzpartikeln (20),
(f) Auskoppeln von Wärmeenergie aus der Formaldehyd-Absorptionsanlage (12), wobei Auskoppeln eine Entnahme von Wärmeenergie zur späteren Nutzung bezeichnet, und
(g) Verwenden der Wärmeenergie zum Trocknen der Holzpartikel (20)
**dadurch gekennzeichnet, dass**
(a) eine Holzwerkstoffplatten-Herstellanlage (10) nach einem der vorstehenden Ansprüche verwendet wird und
(b) eine erste Entnahmestellentemperatur (T₃₀) der Formaldehydlösung (32) an der ersten Entnahmestelle (30) zumindest 10 K oberhalb einer zweiten Entnahmestellentemperatur (T₄₂) der Formaldehydlösung (32) an der zweiten Entnahmestelle (42) beträgt.

8. Verfahren nach Anspruch 7, **dadurch gekennzeichnet, dass**
(a) die Wärmeenergie mittels eines Wärmetransportmediums, insbesondere Wasser, abgeführt wird und
(b) das Wärmetransportmedium eine Temperatur von zumindest 50°C, insbesondere zumindest 55°C, hat.

9. Verfahren nach einem der Ansprüche 7 bis 8, **gekennzeichnet durch** die Schritte:
(a) Erwärmen von Luft (54) mittels des Wärmetransportmediums, sodass Trockenluft (56) entsteht, und
(b) Trocknen der Holzpartikel (20) mittels der Trockenluft (56).

10. Verfahren nach einem der Ansprüche 7 bis 9, **dadurch gekennzeichnet, dass** zumindest 40% einer Absorptionswärme, die beim Bringen des gasförmigen Formaldehyds (26) in Lösung entsteht, zum Trocknen der Holzpartikel (20) verwendet wird.

11. Verfahren nach einem der Ansprüche 7 bis 10, **dadurch gekennzeichnet, dass**
(a) eine Holzwerkstoffplatten-Herstellanlage (10) nach einem der Ansprüche 1 bis 6 verwendet wird und
(b) eine vom zweiten Rezirkulationskreislauf (40) abgeführte zweite Wärmemenge höchstens ein Drittel einer vom ersten Rezirkulationskreislauf (28) abgeführten zweiten Wärmemenge entspricht.

## Claims

1. A wood-based board production installation (10) with
(a) a formaldehyde absorption unit (12) for dissolving gaseous formaldehyde (26) so that formaldehyde solution (32) is formed,
(b) a wood particle production device (14) for producing a wood particles (20),
(c) wherein the wood particle production device (14) comprises a wood particle dryer (50),
(d) wherein the formaldehyde absorption unit (12) features a heat exchanger (38) for decoupling thermal energy, wherein decoupling refers to an extraction of thermal energy for subsequent use, and
(e) the wood particle dryer (50) is designed to dry wood particles (20) by means of the decoupled thermal energy,
(f) wherein the formaldehyde absorption unit (12) comprises
(i) an absorption vessel (22),
(ii) an introduction line (24) for introducing formaldehyde (26) into the absorption vessel (22), and
(iii) a first recirculation circuit (28) which has
- a first extraction point (30) for extracting formaldehyde solution (32) from the absorption vessel (22),
- a first feed point (34) for feeding formaldehyde solution (32) into the absorption vessel (22),
- a heat exchanger (38) and
- a first pump (36) for conveying the formaldehyde solution (32) from the first extraction point (30) through the heat exchanger (38) to the first feed point (34),
and
(iv) is designed to dissipate at least 50% of an absorption heat that is generated when the gaseous formaldehyde (26) is dissolved,
**characterised in that**
(g) the formaldehyde absorption unit (12) has
(i) at least a second recirculation circuit (40), which has
- a second extraction point (42) for extracting formaldehyde solution (32) from the absorption vessel (22),
- a second feed point (46) for feeding formaldehyde solution (32) into the absorption vessel (22), and
- a second pump (44) for conveying the formaldehyde solution (32) from the second extraction point (42) through the heat exchanger (38) to the second feed point (46), and
(ii) is designed to dissipate at most 15% of the absorption heat and/or works at a second temperature level that is below a first temperature level of the first recirculation circuit (28).

2. The wood-based board production installation (10) according to one of the preceding claims, **characterised in that**
(a) the wood particle dryer (50) comprises a belt dryer (62) that has a conveyor belt (60), and
(b) the conveyor belt (60) is permeable to air.

3. The wood-based board production installation (10) according to claim 2, **characterised in that** the conveyor belt (60)
(a) has openings that are at least 90% smaller than 3 millimetres and/or
(b) comprises a textile.

4. The wood-based board production installation (10) according to one of the preceding claims 2 or 3, **characterised in that**
the wood particle dryer (50) features a kiln (68) arranged behind the belt dryer (62) in the direction of material flow of the wood particles (20).

5. The wood-based board production installation (10) according to one of the preceding claims, **characterised by**
(a) a heat transfer circuit (48) which comprises
(i) a feed line (52) for a heat transfer medium, especially a heat transfer liquid, from the heat exchanger (38) to the wood particle dryer (50), and
(ii) a circulation pump for circulating the heat transfer medium, and
(b) an installation control unit that is designed to automatically control the circulation pump and/or the first pump (36) so that a feed temperature (T₅₂) of the heat transfer medium in the feed line (52) is at least 55°C, especially at least 60°C.

6. The wood-based board production installation (10) according to one of the preceding claims, **characterised by**
(a) a gluing installation (66) for gluing the wood particles (20) with wood glue, resulting in glued wood particles (20),
(b) a scattering device (70) for scattering the glued wood particles (20) to form a layered body (72), and
(c) a press (74) for pressing the layered body (72) to form a wood-based board (76).

7. A method for producing wood-based boards (76) comprising the steps
(a) producing a formaldehyde solution (32) by introducing formaldehyde gas into an aqueous liquid by means of a formaldehyde absorption unit (12),
(b) producing wood particles (20) by means of a wood particle production device (14),
(c) drying the wood particles (20),
(d) gluing the wood particles (20) and
(e) producing the wood-based board from the glued wood particles (20),
(f) decoupling thermal energy from the formaldehyde absorption unit (12), wherein decoupling refers to an extraction of thermal energy for subsequent use, and
(g) using the thermal energy to dry the wood particles (20),
**characterised in that**
(a) a wood-based board production installation (10) according to one of the preceding claims is used, and
(b) a first extraction point temperature (T₃₀) of the formaldehyde solution (32) at the first extraction point (30) is at least 10 K above a second extraction point temperature (T₄₂) of the formaldehyde solution (32) at the second extraction point (42).

8. The method according to claim 7, **characterised in that**
(a) the thermal energy is dissipated by means of a heat transfer medium, particularly water, and
(b) the heat transfer medium has a temperature of at least 50°C, in particular at least 55°C.

9. The method according to one of the claims 7 to 8, **characterised by** the steps:
(a) heating air (54) by means of the heat transfer medium, resulting in drying air (56), and
(b) drying the wood particles (20) using the drying air (56).

10. The method according to one of the claims 7 to 9, **characterised in that** at least 40% of an absorption heat generated when dissolving the gaseous formaldehyde (26) is used for drying the wood particles (20).

11. The method according to one of the claims 7 to 10, **characterised in that**
(a) a wood-based board production installation (10) according to one of the claims 1 to 6 is used, and
(b) a second quantity of heat dissipated by the second recirculation circuit (40) corresponds to at most one third of a second quantity of heat dissipated by the first recirculation circuit (28).

## Revendications

1. Installation (10) de fabrication de panneaux en matériau à base de bois, comprenant
(a) un système d'absorption de formaldéhyde (12) pour mettre en solution du formaldéhyde gazeux (26), de manière à former une solution de formaldéhyde (32), et
(b) un dispositif de production de particules de bois (14) pour produire des particules de bois (20),
(c) le dispositif de production de particules de bois (14) comprenant un sécheur de particules de bois (50),
(d) le système d'absorption de formaldéhyde (12) comprenant un échangeur de chaleur (38) pour l'extraction d'énergie thermique, l'extraction signifiant un prélèvement d'énergie thermique pour l'utiliser ultérieurement, et
(e) le sécheur de particules de bois (50) étant réalisé pour faire sécher les particules de bois (20) en utilisant l'énergie thermique extraite,
(f) le système d'absorption de formaldéhyde (12) comprenant
(i) un récipient d'absorption (22),
(ii) une conduite d'introduction (24) pour introduire le formaldéhyde (26) dans le récipient d'absorption (22), et
(iii) un premier circuit de recirculation (28) qui comprend
- un premier emplacement de prélèvement (30) pour prélever la solution de formaldéhyde (32) hors du récipient d'absorption (22),
- un premier emplacement d'alimentation (34) pour alimenter la solution de formaldéhyde (32) dans le récipient d'absorption (22),
- un échangeur de chaleur (38), et
- une première pompe (36) pour transporter la solution de formaldéhyde (32) depuis le premier emplacement de prélèvement (30) à travers l'échangeur de chaleur (38) jusqu'au premier emplacement d'alimentation (34),
et
(iv) qui est réalisé pour dissiper au moins 50 % d'une chaleur d'absorption qui se forme lors de la mise en solution du formaldéhyde gazeux (26),
**caractérisée en ce que**
(g) le système d'absorption de formaldéhyde (12) comprend
(i) au moins un deuxième circuit de recirculation (40) qui comprend
- un deuxième emplacement de prélèvement (42) pour prélever la solution de formaldéhyde (32) hors du récipient d'absorption (22),
- un deuxième emplacement d'alimentation (46) pour alimenter la solution de formaldéhyde (32) dans le récipient d'absorption (22), et
- une deuxième pompe (44) pour transporter la solution de formaldéhyde (32) depuis le deuxième emplacement de prélèvement (42) à travers l'échangeur de chaleur (38) jusqu'au deuxième emplacement d'alimentation (46), et
(ii) qui est adapté pour dissiper au plus 15 % de la chaleur d'absorption et/ou qui fonctionne à un deuxième niveau de température qui est inférieur à un premier niveau de température du premier circuit de recirculation (28).

2. Installation (10) de fabrication de panneaux en matériau à base de bois selon la revendication précédente,
**caractérisée en ce que**
(a) le sécheur de particules de bois (50) comprend un sécheur à bande (62) ayant une bande transporteuse (60), et
(b) la bande transporteuse (60) est perméable à l'air.

3. Installation (10) de fabrication de panneaux en matériau à base de bois selon la revendication 2,
**caractérisée en ce que** la bande transporteuse (60)
(a) présente des ouvertures dont au moins 90 % sont inférieures à 3 millimètres et/ou
(b) comprend un textile.

4. Installation (10) de fabrication de panneaux en matériau à base de bois selon l'une des revendications 2 ou 3,
**caractérisée en ce que**
le sécheur de particules de bois (50) comprend un sécheur à chaud (68) qui est disposé en aval du sécheur à bande (62) dans la direction d'écoulement des particules de bois (20).

5. Installation (10) de fabrication de panneaux en matériau à base de bois selon l'une des revendications précédentes,
**caractérisée par**
(a) un circuit de transport de chaleur (48) qui comprend
(i) une conduite aller (52) pour un fluide caloporteur, en particulier un liquide caloporteur, depuis l'échangeur de chaleur (38) jusqu'au sécheur de particules de bois (50), et
(ii) une pompe de circulation pour faire circuler le fluide caloporteur, et
(b) une commande d'installation qui est réalisée pour commander automatiquement la pompe de circulation et/ou la première pompe (36) de sorte qu'une température aller (T₅₂) du fluide caloporteur dans la conduite aller (52) soit d'au moins 55°C, en particulier d'au moins 60°C.

6. Installation (10) de fabrication de panneaux en matériau à base de bois selon l'une des revendications précédentes,
**caractérisée par**
(a) un système d'encollage (66) pour encoller les particules de bois (20) avec de la colle à bois, de manière à former des particules de bois encollées (20),
(b) un système de dispersion (70) pour disperser les particules de bois encollées (20) pour donner un corps en couches (72), et
(c) une presse (74) pour presser le corps en couches (72) pour donner un panneau en matériau à base de bois (76).

7. Procédé de fabrication de panneaux en matériau à base de bois (76), comprenant les étapes consistant à
(a) préparer une solution de formaldéhyde (32) en introduisant du formaldéhyde gazeux dans un liquide aqueux au moyen d'un système d'absorption de formaldéhyde (12),
(b) produire des particules de bois (20) au moyen d'un dispositif de production de particules de bois (14),
(c) faire sécher les particules de bois (20),
(d) encoller les particules de bois (20), et
(e) fabriquer le panneau en matériau à base de bois à partir des particules de bois encollées (20),
(f) extraire de l'énergie thermique du système d'absorption de formaldéhyde (12), extraire signifiant un prélèvement de chaleur thermique pour l'utiliser ultérieurement, et
(g) utiliser l'énergie thermique pour faire sécher les particules de bois (20), **caractérisé en ce que**
(a) on utilise une installation (10) de fabrication de panneaux en matériau à base de bois selon l'une des revendications précédentes, et
(b) une première température d'emplacement de prélèvement (T₃₀) de la solution de formaldéhyde (32) au niveau du premier emplacement de prélèvement (30) est d'au moins 10 K supérieure à une deuxième température d'emplacement de prélèvement (T₄₂) de la solution de formaldéhyde (32) au niveau du deuxième emplacement de prélèvement (42).

8. Procédé selon la revendication 7,
**caractérisé en ce que**
(a) l'énergie thermique est dissipée au moyen d'un fluide caloporteur, en particulier de l'eau, et
(b) le fluide caloporteur a une température d'au moins 50 °C, en particulier d'au moins 55 °C.

9. Procédé selon l'une des revendications 7 à 8,
**caractérisé par** les étapes consistant à :
(a) chauffer de l'air (54) au moyen du fluide caloporteur de manière à former de l'air de séchage (56), et
(b) faire sécher les particules de bois (20) au moyen de l'air de séchage (56).

10. Procédé selon l'une des revendications 7 à 9,
**caractérisé en ce qu'**au moins 40 % d'une chaleur d'absorption générée lors de la mise en solution du formaldéhyde gazeux (26) est utilisée pour faire sécher les particules de bois (20).

11. Procédé selon l'une des revendications 7 à 10,
**caractérisé en ce que**
(a) on utilise une installation (10) de fabrication de panneaux en matériau à base de bois selon l'une des revendications 1 à 6, et
(b) une deuxième quantité de chaleur dissipée du deuxième circuit de recirculation (40) correspond au plus à un tiers d'une deuxième quantité de chaleur dissipée du premier circuit de recirculation (28).
